# EUROPEAN PATENT APPLICATION

(11) **EP 1 168 288 A2**
(43) Date of publication of application: **02.01.2002**
(21) Application number: 01305331.9
(22) Date of filing: 19.06.2001
(51) Int. Cl.: G09G 3/04

(54) **Status display panel for an electronic device**

(30) Priority: 27.06.2000 GB 0015542
(71) Applicant: Pace Micro Technology Ltd, Saltaire, Shipley BD18 3LF (GB)
(72) Inventor: Turner, William, Waterbeach, Cambridge CB5 9QH (GB)
(74) Representative: Wood, Graham

(57) **Abstract**

A front panel display (6) for an electronic device. The front panel display (6) indicates the operational status of the device, such as a broadcast data receiver, to a user. The illumination and/or brightness of the display (6) is/are user adjustable and/or adjustable depending on the status of the device and/or ambient lighting in the locality of the device.

## Description

This invention relates to a front panel display on electronic apparatus, and particularly to a front panel display for apparatus which is used as part of or positioned in close proximity to a television set or display screen, such as broadcast data receivers and video recorders forming part of a television system.

The television system includes a display screen for displaying data received via a broadcast data receiver (BDR) or video cassette recorder (VCR). A BDR receives digital data via terrestrial, cable or digital means from a broadcaster. The BDR or VCR is provided with a front panel display having a liquid crystal display (LCD) or some other light emitting display, which indicates the status of the BDR or VCR to the user. For example, the BDR or VCR can indicate when re-wind or fast forward control buttons are activated or when a channel has been changed.

In a typical home environment, the room in which films and programmes are viewed on a television system are often darkened so that sunlight and other forms of lighting do not affect the quality of the display on the display screen. The BDR or VCR is typically provided on or adjacent the display screen and is therefore likely to be in the user's field of view. The front panel display of the BDR or VCR is typically bright relative to the darkened surroundings of the room and may distract the viewer from the display screen. This is obviously undesirable.

It is therefore an object of the present invention to overcome the abovementioned problem.

According to a first aspect of the present invention there is provided a front panel display for an electronic device, said front panel display indicating the operational status of the device to a user and characterised in that the illumination and/or brightness of the display is/are adjustable by the user of the device using control means.

Preferably the brightness and/or illumination of the display is adjustable depending on the status of the device and/or ambient lighting in the locality of the device.

Preferably the electronic apparatus is a broadcast data receiver, television set or a video cassette recorder.

According to a second aspect of the present invention there is provided an electronic device having a front panel display, said front panel display indicating the operational status of the device to a user and characterised in that the illumination and/or brightness of the display is/are adjustable by the user of the device using control means.

According to a further aspect of the present invention there is provided a broadcast data receiver having a front panel display, said receiver receiving audio, video and/or auxiliary data from a broadcaster at a remote location, said display indicating the operational status of the receiver to a user and characterised in that the illumination and/or brightness of the display is/are adjustable by the user of the receiver using control means.

Preferably the front panel display brightens automatically upon activation of a function/control button on the remote control and/or control buttons on the broadcast data receiver (BDR) or video cassette recorder (VCR), thereby allowing a user to see the function/control of the BDR or VCR being undertaken.

Preferably the front panel display dims automatically when function/control buttons on the remote control, BDR and/or VCR are inactive for a period of time.

In one embodiment the front panel display dims after a pre-determined time period following activation of one or more function control buttons on the remote control, BDR and/or VCR.

In any of the above embodiments, the user can typically override the brightness/illumination of the display to a user-defined level.

In one embodiment two brightness settings are provided on the front panel display, a bright setting during activation of a function of the BDR or VCR and/or selection of a bright setting by the user, and a dim setting during inactivation of functions of the BDR or VCR and/or selection of a dim setting by the user.

The brightness levels are typically predetermined by the manufacturer but can be user defined. The user can define the level of brightness and/or illumination using remote control means, control buttons on the display, BDR and/or VCR, voice recognition and/or the like.

Preferably the option of having the brightness setting can be switched on or off as required.

In one embodiment a light sensor is provided such that the front panel display dims/brightens according to the status of the BDR or VCR relative to the amount of light sensed in the surrounding environment of the BDR or VCR.

An advantage of the present invention is that it allows the brightness of the front panel display of electronic apparatus, and particularly the front panel display of a BDR or VCR to be adjusted automatically and/or by the user such that the front panel display is less obtrusive during viewing of images on the display screen.

An embodiment of the present invention will now be described with reference to the Figures wherein:
Figure 1 is an example of a front panel display according to an embodiment of the present invention;
Figure 2a is an example of the front panel display in a bright setting and figure 2b is an example of the display in a dim setting.

In a typical household the display screen 2 of a television system is provided adjacent to the BDR 4. If the television system is in a darkened room for the viewing of films and/or the like, the front panel display 6 on the BDR 4 is likely to be in the field of vision of the user and the brightness of the same is likely to distract the user from the display screen 2.

The front panel display 6 is in the form of an LCD having a seven-segment type display 7.

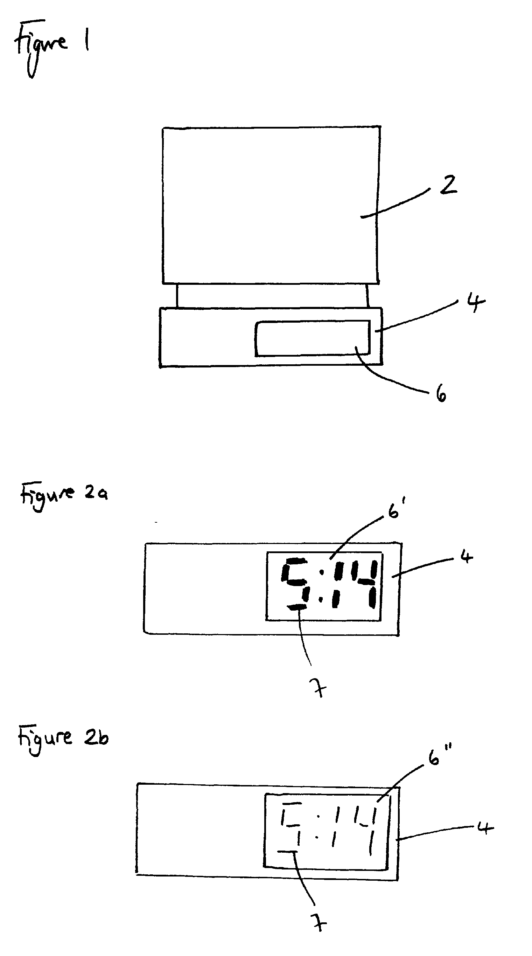

The front panel display 6 is not generally required to be bright and clearly seen by the user unless the BDR is undergoing a function or change in status. Therefore the front panel display 6 is provided with means to automatically dim the display 6", as shown in figure 2b, when the BDR is inactive and not undergoing any function or change in status, thereby making the same less obtrusive to the user. The front panel display 6' automatically brightens, as shown in figure 2a, when a function is activated or the BDR undergoes a change in status, thereby allowing the user to clearly see what function or status change is taking place. The change in status/function activation of the BDR is typically activated by the user using control means, such as remote control means. However, it is also noted that the user can change the illumination/brightness of the display panel using control means independently of a change in status of the BDR or the ambient lighting surrounding the device. Typical activation of functions which affect the brightness of the display 6 include fast forwarding, rewinding, changing channels and/or the like. Activation of function or status of the STB can be via the remote control or control button on the BDR.

A light sensor can be located in the front panel display to allow adjustment of the display in response to the ambient lighting in the locality of the device.

The backlight of the LCD and/or the seven-segment display can be dimmed/brightened. For example, the backlit display can be dimmed by reducing the voltage, and the LED (light emitting diode) display can be dimmed by pulsing the LEDs.

The front panel display 6 typically remains bright for a pre-determined period of time after a function or status change has occurred and then dims. However, the front panel display can dim immediately after a function or status change has finished.

Thus the present invention provides a means of automatically adjusting and/or manually adjusting the brightness of the front panel display of a BDR or VCR. This provides the user with the feeling of quality and reduces the distraction from the display screen created by a bright front panel display.

## Claims

1. A front panel display (6) for an electronic device, said front panel display (6) indicating the operational status of the device to a user and **characterised in that** the illumination and/or brightness of the display (6) is/are adjustable by the user of the device using control means.

2. A display according to claim 1 **characterised in that** the illumination and/or brightness of the display (6) is adjusted in response to the user initiating a change in the status of the device.

3. A display according to claim 1 **characterised in that** the control means are any or any combination of a remote control handset for operation of the device, control buttons on the device and/or display or voice recognition system.

4. A display according to claim 1 **characterised in that** the display (6) brightens on activation of a function/control button by the user on the remote control handset of the device and/or control buttons on the device.

5. A display according to claim 1 **characterised in that** the display (6) dims when one or more function/control buttons have not been activated by the user for a pre-determined period of time.

6. A display according to claim 1 **characterised in that** the display (6) is provided with two brightness settings, a dim setting during pre-determined time periods of inactivation of the device and a bright setting during activation of the device.

7. A display according to claim 1 **characterised in that** the brightness levels of the display (6) are determined by the manufacturer of the device.

8. A display according to claim 1 **characterised in that** the ability to adjust the illumination and/or brightness of the display (6) can be switched between on/off positions as and when required.

9. A display according to claim 1 **characterised in that** at least one light sensor is provided in the device and/or front panel display (6) to monitor the ambient light levels surrounding the device and the illumination and/or brightness of the display is adjustable depending on the ambient lighting in the locality of the device.

10. A display according to claim 1 **characterised in that** the electronic device is any or any combination of a broadcast data receiver (4), video recorder and/or television display screen (2).

11. A display according to claim 1 **characterised in that** it is a liquid crystal display.

12. A display according to claim1 **characterised in that** the brightness and/or illumination of the backlighting of the display (6) is adjusted.

13. A display according to claim 12 **characterised in that** the brightness and/or illumination is adjusted by altering the voltage to light emitting diodes forming the backlight.

14. A display according to claim 1 **characterised in that** the brightness and/or illumination of the seven segment display (6) is adjusted.

15. A display according to claim 14 **characterised in that** the brightness and/or illumination is adjusted by pulsing the light emitting diodes forming the seven segment display.

16. An electronic device having a front panel display, said front panel display (6) indicating the operational status of the device to a user and **characterised in that** the illumination and/or brightness of the display (6) is/are adjustable by the user of the device using control means.

17. A broadcast data receiver (4) having a front panel display (6), said receiver (4) receiving audio, video and/or auxiliary data from a broadcaster at a remote location, said display (6) indicating the operational status of the receiver (4) to a user and **characterised in that** the illumination and/or brightness of the display (6) is/are adjustable by the user of the receiver using control means.
